# EUROPEAN PATENT SPECIFICATION

(11) **EP 2 955 837 B1**
(45) Date of publication and mention of the grant of the patent: **13.09.2017**
(21) Application number: 14275134.6
(22) Date of filing: 10.06.2014
(51) Int. Cl.: H02M 7/483, H02M 7/757

(54) **Semicontuctor switching circuit**
Halbleiterschaltkreis
Dispositif de commutation à semi-conducteur

(43) Date of publication of application: 16.12.2015
(73) Proprietor: General Electric Technology GmbH, 5400 Baden (CH)
(72) Inventor: Davidson, Colin Charnock, Stafford, ST17 4PS (GB); Efika, Ikenna Bruce, Stafford, ST16 3QE (GB); Trainer, David Reginald, Alvaston Derby, DE24 0AQ (GB)
(74) Representative: Cleary, Fidelma

(56) References cited:
- WO-A1-2011/120572
- WO-A1-2013/071957
- US-A1- 2014 002 933

## Description

This invention relates to a semiconductor switching circuit for use in a HVDC power converter.

In power transmission networks alternating current (AC) power is typically converted to direct current (DC) power for transmission via overhead lines and/or under-sea cables. This conversion removes the need to compensate for the AC capacitive load effects imposed by the transmission line or cable and reduces the cost per kilometre of the lines and/or cables, and thus becomes cost-effective when power needs to be transmitted over a long distance.

HVDC power converters are used to convert AC power to DC power. Semiconductor switching elements, such as thyristors, are a key component of HVDC power converters, and act as controlled rectifiers to convert AC power to DC power and vice versa.

WO 2011/120572 A1 discloses a voltage source converter for high voltage DC power transmission and reactive power compensation comprising a global control unit, a control hub and a slave converter cell associated with the control hub.

WO 2013/071957 A1 discloses a power electronic module, for use in a chain-link converter of a voltage source converter providing high voltage direct current power transmission and reactive power compensation.

US 2014/002933 A1 discloses a modular multilevel converter valve protection method for a modular multilevel converter.

According to an aspect of the invention there is provided a semiconductor switching circuit, for use in a HVDC power converter, comprising:
a main current branch including a main semiconductor switching element and through which current flows when the main semiconductor switching element is switched on;
an auxiliary current branch connected in parallel or inverse-parallel with the main current branch,
characterised by the auxiliary current branch including an auxiliary circuit, the auxiliary circuit including a plurality of active auxiliary semiconductor switching elements connected to form an active switching bridge, the auxiliary current branch further including an energy storage device and/or an impedance device, the active switching bridge having a control unit operatively connected therewith, the control unit being configured to switch the active switching bridge to connect the auxiliary circuit into and out of circuit with the main current branch and thereby selectively create an alternative current path via the auxiliary current branch whereby current flowing through the main current branch is diverted to flow through the alternative current path to regulate one or more of current flowing through the main semiconductor switching element and voltage appearing across the main semiconductor switching element, wherein the control unit is configured to switch the active switching bridge to arrange the alternative current path to selectively pass through the energy storage device and/or impedance device.

The inclusion of a control unit configured to create an alternative current path via the auxiliary current branch, and thereby via the energy storage device and/or impedance device, allows the semiconductor switching circuit according to the invention to provide a range of functions for improving the switching performance of the main semiconductor switching element by selectively connecting the energy storage device and/or impedance device of the auxiliary circuit to the main semiconductor switching element to modify one or more of current flowing through the main semiconductor switching element and voltage appearing across the main semiconductor switching element.

In addition the ability of the control unit to switch the auxiliary circuit out of circuit with the main current path permits removal of the alternative current path when there is no need for regulation of one or more of current flowing through the main semiconductor switching element and voltage appearing across the main semiconductor switching element. This means that the auxiliary circuit is only required to stay connected to the main semiconductor switching element when it is needed to perform its function. Otherwise, if the auxiliary circuit were to remain connected to the main semiconductor switching element when it is not required to do so, the resulting increase in time during which the auxiliary circuit is connected to the main semiconductor switching element would require a corresponding increase in electrical rating of each component of the auxiliary circuit, thus resulting in an auxiliary circuit with higher losses and with increased size and weight.

Moreover the provision of an active switching bridge to connect the auxiliary circuit into and out of circuit with the main current branch, and thereby to permit creation of the alternative current path via the auxiliary current branch, permits the control unit to arrange the route through which the alternative current path passes through the auxiliary current branch such that current can flow through various routes in the auxiliary current branch. This is because the structure of the active switching bridge permits its configuration to provide more than one route for current flowing therethrough. This in turn permits arrangement of the auxiliary circuit components to provide a more compact and cheaper auxiliary circuit whilst retaining its functionality.

In embodiments of the invention the control unit may be configured to switch the active switching bridge to arrange the alternative current path to selectively pass through and bypass the energy storage device and/or impedance device.

Configuration of the control unit in this manner permits the auxiliary circuit to be connected to the main semiconductor switching element in different ways to provide different functions, and thereby results in a versatile auxiliary circuit.

The range of functions for improving the switching performance of the main semiconductor switching element may include, but are not limited to, regulation of rate of change of current, regulation of rate of change of voltage, AC voltage grading, DC voltage grading and regulation of reverse recovery and blocking behaviour of the main semiconductor switching element.

Conventionally it is known to use a saturable reactor to control the rate of change of current experienced by a switching element. The saturable reactor can be bulky and complicated to design. Additionally a complicated physical geometry of the saturable reactor is required to achieve optimal resistance and inductance parameters.

The control unit may be configured to switch the active switching bridge to connect the auxiliary circuit into and out of circuit with the main current branch and thereby selectively create an alternative current path via the auxiliary current branch whereby current flowing through the main current branch is diverted to flow through the alternative current path to regulate one or more of a rate of change of current flowing through the main semiconductor switching element and a rate of change of voltage appearing across the main semiconductor switching element.

Configuration of the control unit in this manner permits reductions in size and complexity of the aforementioned saturable reactor, without exposing the main semiconductor switching element to high rates of change of current and voltage.

The control unit may be configured to switch the active switching bridge to connect the auxiliary circuit into and out of circuit with the main current branch and thereby selectively create an alternative current path via the auxiliary current branch whereby current flowing through the main current branch is diverted to flow through the alternative current path to regulate a voltage appearing across the main semiconductor switching element and thereby provide AC and/or DC voltage grading for the main semiconductor switching element.

In addition the structure of the active switching bridge may be adapted to permit the auxiliary circuit to perform both AC and DC voltage grading functions, either separately or simultaneously.

During reverse recovery of the main semiconductor switching element, the main current branch experiences a flow of reverse recovery current until the reverse recovery charge in the main semiconductor switching element is depleted.

The control unit may be configured to switch the active switching bridge to connect the auxiliary circuit into and out of circuit with the main current branch and thereby selectively create an alternative current path via the auxiliary current branch whereby a reverse recovery current flowing through the main current branch is diverted to flow through the alternative current path to regulate the reverse recovery current flowing through the main semiconductor switching element. By diverting the reverse recovery current to flow in the alternative current path, the reverse recovery current is prevented from flowing out of the semiconductor switching circuit. This can be advantageous for a plurality of series-connected main semiconductor switching circuits with dissimilar recovery characteristics.

The semiconductor switching circuit may include circuit terminals connectable to an electrical network. The main and auxiliary current branches may extend between the circuit terminals. The auxiliary current branch may be configured to store energy when a current flowing through the main current branch is diverted to flow through the alternative current path. The control unit may be configured to switch the active switching bridge to selectively release the stored energy into at least one of the circuit terminals.

The configuration of the active switching bridge in the auxiliary circuit may vary depending on the functions required of the auxiliary circuit. Examples of different configurations of the active switching bridge are described, but are not limited to, as follows.

In embodiments of the invention the impedance device may be connected in series or parallel with the energy storage device and/or active switching bridge, and/or the energy storage device and/or impedance device may be connected within the active switching bridge.

In further embodiments of the invention the plurality of active auxiliary semiconductor switching elements may be connected in parallel with the energy storage device in a half-bridge arrangement between first and second bridge terminals.

In other embodiments of the invention the plurality of active auxiliary semiconductor switching elements may define first and second sets of active auxiliary semiconductor switching elements, and the first and second sets of active auxiliary semiconductor switching elements may be connected in parallel with the energy storage device in a full-bridge arrangement between first and second bridge terminals. Such an arrangement permits current to flow through the active switching bridge in either direction between the first and second bridge terminals.

In such embodiments of the invention the auxiliary circuit may include a limb, the limb including a series connection of the energy storage and impedance devices. The first and second sets of active auxiliary semiconductor switching elements may be connected in parallel with the limb to define a full-bridge arrangement between the first and second bridge terminals.

One of the first and second sets of active auxiliary semiconductor switching elements may include first and second pairs of active auxiliary semiconductor switching elements separated by the corresponding bridge terminal, the first pair of active auxiliary semiconductor switching elements being separated by a first junction, the second pair of active auxiliary semiconductor switching elements being separated by a second junction.

When the auxiliary circuit includes the limb, the auxiliary circuit may include a pair of active switching elements or passive current check elements, the pair of active switching elements or passive current check elements being connected across the first and second junctions, a third junction between the pair of active switching elements or passive current check elements being connected to a fourth junction between the series-connected energy storage and impedance devices of the limb.

A passive current check element is any device that permits current to flow therethrough in one direction only, e.g. a diode.

Optionally the impedance device may be connected across the first and second junctions.

The active switching bridge may be a multilevel active switching bridge.

The energy storage device may be or may include a capacitor. The impedance device may include an inductor and/or a resistor.

At least one of the plurality of active auxiliary semiconductor switching elements may be switchable to operate in an impedance mode to present an impedance to a current flowing therethrough, and wherein the alternative current path when created passes through the auxiliary semiconductor switching element that is switched to operate in its impedance mode. Preferably the or each active auxiliary semiconductor switching element switchable to operate in an impedance mode is or includes a transistor that is switchable to operate in a triode mode.

Configuration of at least one of the plurality of active auxiliary semiconductor switching elements to be switchable to operate in an impedance mode enables omission of the impedance device from the auxiliary circuit, without adversely affecting the ability of the auxiliary circuit to present an impedance to a current flowing therethrough, thus providing further reductions in the size and weight of the auxiliary circuit.

The or each auxiliary semiconductor switching element may be or may include a transistor. Transistors, especially those incorporating wide-band-gap semiconducting materials, have desirable high voltage performance characteristics.

At least one of the plurality of active auxiliary semiconductor switching elements may be a bidirectional semiconductor switching element.

The main current branch may include a single main semiconductor switching element or a plurality of main semiconductor switching elements.

When the main current branch includes a single main semiconductor switching element, the auxiliary current branch may be connected between first and second connection terminals of the main semiconductor switching element whereby the main and auxiliary current branches together define a semiconductor switching assembly. Such an arrangement allows each auxiliary semiconductor switching element in the active switching bridge to share any voltage grading circuitry associated with the single main semiconductor switching element and/or share a power supply with the single main semiconductor switching element.

Each active auxiliary semiconductor switching element may be or may include a single semiconductor switching device. Alternatively each active auxiliary semiconductor switching element may include a plurality of semiconductor switching devices, such as a plurality of series-connected or parallel-connected semiconductor switching devices.

The foregoing arrangements permit a tailoring of the configuration of the auxiliary circuit branch according to the performance rating of available active auxiliary semiconductor switching elements.

The main current branch may include a main string of series-connected main semiconductor switching elements, the main string having an upstream connection terminal at an upstream end thereof and a downstream connection terminal at a downstream end thereof. The auxiliary branch may be connected between the upstream and downstream connectional terminals of the main string.

The auxiliary current branch may include a plurality of auxiliary circuits. At least two of the plurality of auxiliary circuits may be connected in series and/or at least two of the plurality of auxiliary circuits may be connected in parallel.

Main and auxiliary current branches configured in such a manner provides considerable flexibility in tailoring the voltage ratings of the auxiliary semiconductor switching elements and the voltage ratings of the main semiconductor switching elements.

In addition the inclusion of a plurality of auxiliary circuits in the auxiliary current branch further increases the number of routes through which the alternative current path can pass through the auxiliary current branch, thus increasing the range of possible functions for improving the switching performance of the main semiconductor switching element. This is because it permits the arrangement of the alternative current path to pass through various combinations of energy storage and/or impedance devices to perform various functions.

Furthermore the inclusion of a plurality of auxiliary circuits in the auxiliary current branch enables regulation of one or more of current flowing through the main semiconductor switching element and voltage appearing across the main semiconductor switching element in a stepwise manner by actively varying the number of energy storage devices and/or impedance devices through which the alternative current path passes.

The ratings of the energy storage and/or impedance devices of each auxiliary circuit may be reduced in inverse proportion to the number of auxiliary circuits.

There may be provided a semiconductor switching apparatus comprising a plurality of parallel-connected semiconductor switching circuits as described hereinabove and/or a plurality of series-connected semiconductor switching circuits as described hereinabove. Such a semiconductor switching apparatus desirably supports the switching of a larger current or voltage than is possible by a single such semiconductor switching circuit.

The control unit may be a single control unit or include a group of control sub-units, each control sub-unit being associated with a respective one of the plurality of active auxiliary semiconductor switching elements.

Preferred embodiments of the invention will now be described, by way of non-limiting example, with reference to the accompanying drawings in which:
Figure 1 shows, in schematic form, a semiconductor switching circuit according to a first embodiment of the invention;
Figure 2 shows, in schematic form, a converter leg;
Figure 3 shows, in schematic form, an equivalent circuit that is formed when a valve is turned on and thereby conducts a forward current;
Figure 4 shows, in schematic form, thyristors in their respective reverse recovery states during their respective transition from a conducting mode to a blocking mode,
Figure 5 illustrates, in graph form, the different states within the conduction and blocking modes of the thyristors that form part of the converter leg of Figure 2;
Figures 6 to 8 show, in schematic form, various configurations of an auxiliary circuit of the semiconductor switching circuit of Figure 1 when it is switched to create an alternative current path flowing therethrough;
Figure 9 shows, in schematic form, a semiconductor switching circuit according to a second embodiment of the invention;
Figures 10 to 14 show, in schematic form, various configurations of an auxiliary circuit of the semiconductor switching circuit of Figure 9 when it is switched to create an alternative current path flowing therethrough;
Figures 15 to 21 show, in schematic form, semiconductor switching circuits according to third, fourth, fifth, sixth, seventh, eighth and ninth embodiments of the invention respectively; and
Figures 22a to 22c show, in schematic form, various configurations of an active bidirectional semiconductor switching element.

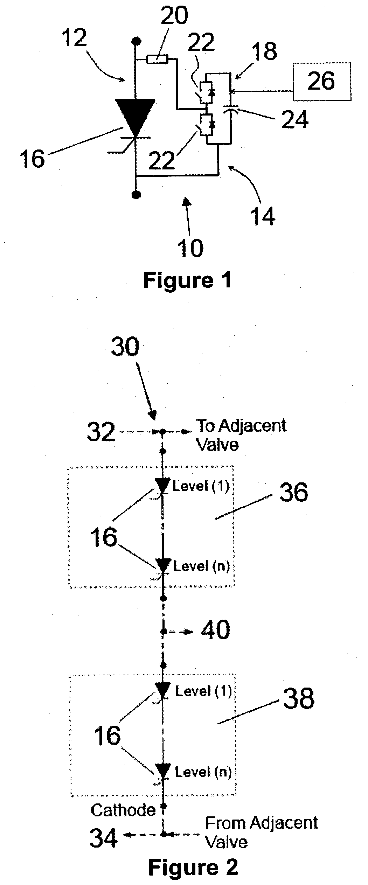

A first semiconductor switching circuit according to a first embodiment of the invention is shown in Figure 1 and is designated generally by the reference numeral 10.

The first semiconductor switching circuit 10 comprises main and auxiliary current branches 12,14.

The main current branch 12 includes a main semiconductor switching element in the form of a thyristor 16. When the thyristor 16 is switched on, current flows through the main current branch 12. When the thyristor 16 is switched off, current is blocked from flowing through the main current branch 12.

The thyristor 16 is a four-layer (P₁,N₁,P₂,N₂) device with three internal junctions. The first internal junction lies between the P₁ and N₁ layers, i.e. close to the anode terminal. The second internal junction lies between the P₂ and N₂ layers, i.e. close to the cathode terminal. The third internal junction lies between the N₁ and P₂ layers. In co-ordination the electron-hole activity that occur across these internal junctions causes the thyristor 16 to experience any one of conduction, reverse recovery and blocking (i.e. reverse or forward blocking) modes.

The auxiliary current branch 14 is connected in parallel with the main current branch 12. The auxiliary current branch 14 includes an auxiliary circuit 18. The auxiliary circuit 18 includes a plurality of active auxiliary semiconductor switching elements connected to form an active switching bridge. More specifically, a pair of active auxiliary semiconductor switching elements are connected in parallel with an energy storage device in a half-bridge arrangement between first and second bridge terminals. The auxiliary circuit 18 further includes an impedance device 20 connected in series with the active switching bridge.

In the embodiment shown, each active auxiliary semiconductor switching element is a transistor 22 that is connected in anti-parallel with a diode, and the energy storage device is a capacitor 24. In addition, each transistor 22 is switchable to operate in a triode mode to present an impedance to a current flowing therethrough. Each of the transistors 22 and capacitor 24 is rated for compatibility with the thyristor's voltage rating.

The active switching bridge has a control unit 26 operatively connected therewith. It will be appreciated that the control unit 26 may be a single control unit 26 configured to control the switching of the plurality of active semiconductor switching elements, or may include a group of control sub-units, whereby each control sub-unit is configured to control the switching of a respective one of the plurality of transistors 22.

The control unit 26 is configured to switch the active switching bridge to connect the auxiliary circuit 18 into and out of circuit with the main current branch 12. By connecting the auxiliary circuit 18 into and out of circuit with the main current branch 12, an alternative current path via the auxiliary current branch 14 is selectively created. Consequently current flowing through the main current branch 12 is diverted to flow through the alternative current path and through the impedance device 20.

In addition the control unit 26 is configured to switch the active switching bridge to arrange the alternative current path to selectively pass through and bypass the capacitor 24, a feature that is enabled by the half-bridge arrangement of the plurality of transistors 22 and capacitor 24.

The capacitor 24 is selectively bypassed or inserted into the auxiliary circuit 18 by changing the states of the transistors 22. This selectively directs current through the capacitor 24 or causes current to bypass the capacitor 24 so that the auxiliary circuit 18 presents a zero or positive voltage to a current flowing therethrough.

The capacitor 24 is bypassed when the transistors 22 are configured to directly connect the bridge terminals together. This causes current in the auxiliary circuit 18 to pass directly between the bridge terminals and bypass the capacitor 24, and so the auxiliary circuit 18 presents a zero voltage to a current flowing therethrough.

The capacitor 24 is inserted into the auxiliary circuit 18 when the transistors 22 are configured to allow the current in the auxiliary circuit 18 to flow into and out of the capacitor 24. The capacitor 24 then charges or discharges its stored energy so as to present a non-zero voltage to a current flowing therethrough.

For the purposes of this specification, the invention is described with reference to its use in a HVDC power converter. Nevertheless it will be appreciated that the described use of the invention in a HVDC power converter is merely to illustrate the working of the invention, the invention is not limited to use in a HVDC power converter, and the described use of the invention applies mutatis mutandis to other applications that require semiconductor switching.

Figure 2 shows, in schematic form, a converter leg 30 that makes up one phase in a six-pulse bridge arrangement. The converter leg 30 extends between first and second DC terminals 32,34, and includes first and second valves 36,38 separated by an AC terminal 40. Each valve 36,38 includes a plurality of series-connected thyristors 16, each thyristor 16 belonging to a respective first semiconductor switching circuit 10.

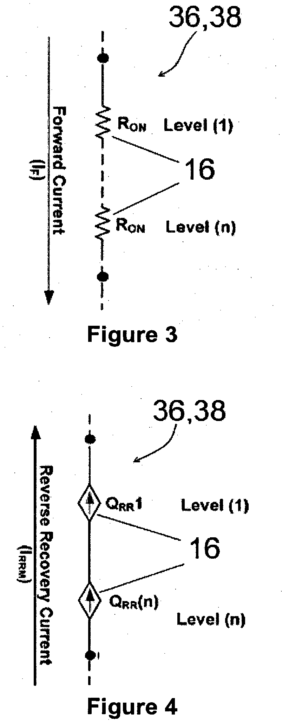

The operation of each thyristor 16 in a given valve 36,38, in the absence of the corresponding alternative current path, is described as follows, with reference to Figures 3 to 5.

Figure 3 shows an equivalent circuit that is formed when the valve 36,38 is turned on and thereby conducts a forward current I_{F}. At this stage each thyristor 16 presents an "ON-state" resistance across its anode and cathode terminals.

Figure 4 shows each thyristor 16 in a reverse recovery state during its transition from a conducting mode to a blocking mode, whereby a reverse recovery current flows through the valve 36,38. The flow of reverse recovery current arises as a result of charge that was stored in each thyristor 16. For a given thyristor 16, the stored charge must be depleted before the thyristor 16 can enter its forward blocking mode in order to prevent it from being retriggered into conduction.

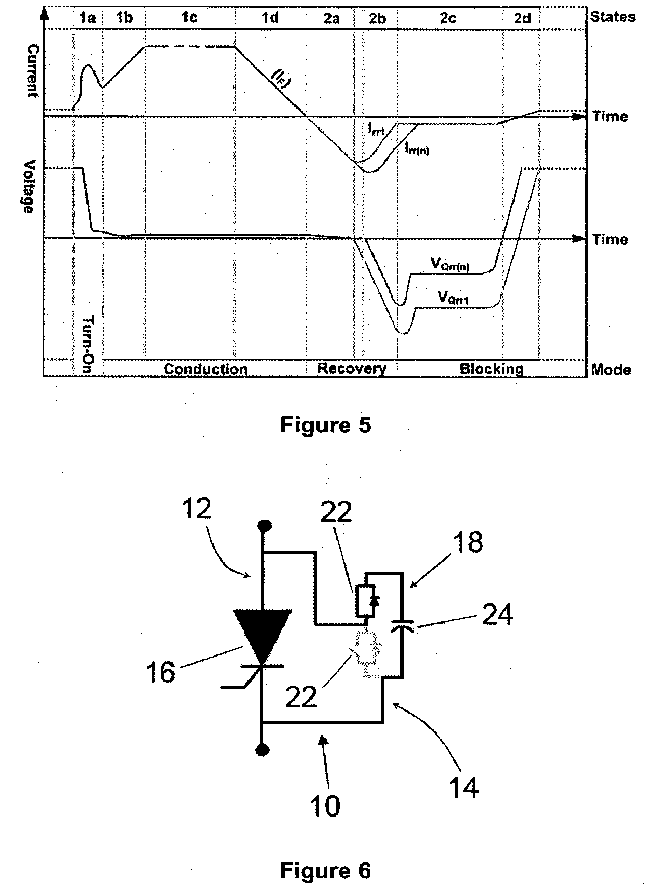

Figure 5 illustrates, in graph form, the different states within the conduction mode (states 1a, 1b, 1c and 1d) and blocking mode (states 2a, 2b, 2c and 2d) of the thyristors 16.

Each thyristor 16 is triggered when sufficient current is applied at its gate terminal. As indicated by state 1a, the thyristor 16 is exposed to a fast rising forward current from an external circuit during the first few µs following turn-on. Only a small portion of the thyristor 16 close to its gate terminal is activated during the first few µs. Therefore, the rate of rise of current must be limited to prevent exposure of small portions of the device to a high current amplitude during turn-on. This avoids local overheating and ultimately device failure.

Each thyristor 16 eventually reaches its fully ON state (as indicated by state 1b). At this time each thyristor 16 conducts an alternating current waveform by virtue of a converter current overlap that is present when a current commutates to the valve 36,38 from a valve (not shown) of another converter leg that makes up another phase of the six-pulse bridge arrangement. Each thyristor 16 conducts a direct current waveform (as indicated by state 1c) when the valve 36,38 is carrying the full converter leg current. This is followed by the thyristor 16 conducting an alternating current waveform (as indicated by state 1d) by virtue of a subsequent converter current overlap.

When the current flowing through a given thyristor 16 drops below its "holding current" value, its blocking mode is initiated. The charge stored in the given thyristor 16 causes a reverse recovery current I_{RRM} to flow through the thyristor 16, and thereby through the valve 36,38.

The series-connected thyristors 16 in the valve 36,38 may have dissimilar recovery characteristics due to different reverse recovery charge levels Q_{RR}1, Q_{RR}(n). As a result the series-connected thyristors 16 support recovery voltages at different times, as indicated by state 2b in Figure 6, when Q_{RR}1 < Q_{RR}(n) in the case of two thyristors 16. In this case, Q_{RR}1 depletes sooner than Q_{RR}(n). Consequently, one thyristor 16 establishes a reverse recovery voltage V_{QRR1} that is higher than and occurs prior to the reverse recovery voltage V_{QRR}(n) of the other thyristor 16. Thereafter, after a certain period of time, all of the thyristors 16 establish their reverse blocking voltages (as indicated by state 2c), which is held until the valve 36,38 is ready to commence forward blocking (as indicated by state 2d).

The dissimilar Qrr values may be affected by different conditions, such as the rate of change of current prior to reverse recovery and the doping characteristics of each thyristor 16. As such, it is difficult to determine the time delay before the forward blocking voltage when the recovery characteristics are unmanaged.

Prior to the thyristors 16 supporting a forward blocking voltage, a voltage change in each thyristor 16 occurs from a reverse blocking voltage to a forward blocking voltage. If the resultant rate of rise of voltage is high enough, a capacitance charging current will flow in each thyristor 16. If the capacitance charging current becomes too large, unintended thyristor triggering may occur. Such triggering is destructive and may compromise the operation of the HVDC power converter.

When a surge arrester with a pre-established current is connected across each valve 36,38, the valve 36,38 when in its blocking mode will experience a large rate of rise in current at turn-on. Additionally this could result in a rate of rise of voltage across the other valve 36,38 that is high enough to cause its turn-on.

The switching performance of each thyristor 16 as described hereinabove can be improved through operation of each first semiconductor switching circuit 10 to form the alternative current path at the various stages of the conduction, reverse recovery and blocking modes to form any one of:
- an impedance-capacitance circuit connected in parallel with the thyristor 16; or
- an impedance circuit connected in parallel with the thyristor 16.

Examples of the impedance-capacitance and impedance circuits are schematically shown in Figures 6 to 8. It will be understood that the impedance-capacitance circuit may be connected in inverse-parallel with the corresponding thyristor 16 by connecting the auxiliary current branch 14 in inverse-parallel with the main current branch 12.

The formation of each of these circuits diverts the current flowing through the thyristor 16 to flow through the alternative current path and thereby enables each auxiliary circuit 18 to perform a specific function to improve the switching performance of the corresponding thyristor 16. The range of functions for improving the switching performance of each thyristor 16 include, but are not limited to, regulation of rate of change of current, regulation of rate of change of voltage, AC voltage grading, DC voltage grading and regulation of reverse recovery and blocking behaviour of the thyristor 16.

To form an impedance-capacitance circuit that is connected in parallel with the thyristor 16, the control unit 26 switches the transistors 22 of the auxiliary circuit 18 to arrange the alternative current path to flow through the capacitor 24 and thereby insert the capacitor 24 into the auxiliary circuit 18, as shown in Figure 6. This results in the capacitance being connected in series with the impedance device 20 to form the impedance-capacitance circuit, and thereby results in the impedance-capacitance circuit being connected in parallel with the thyristor 16. This permits the auxiliary circuit 18 to provide regulation of rate of change of current, regulation of rate of change of voltage and AC voltage grading of the thyristor 16.

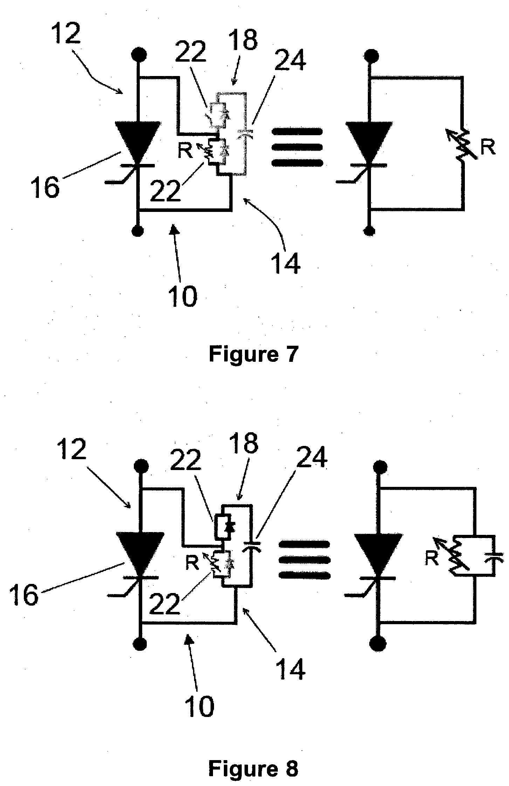

To form an impedance circuit that is connected in parallel with the thyristor 16, the control unit 26 switches the transistors 22 of the auxiliary circuit 18 to arrange the alternative current path to bypass the capacitor 24 of the auxiliary circuit 18. This results in the impedance device 20 being connected in parallel with the thyristor 16. This permits the auxiliary circuit 18 to provide DC voltage grading of the thyristor 16. In addition the transistor 22 through which the alternative current path passes may be switched to operate in its triode mode so as to present an impedance to the current flowing therethrough, as shown in Figure 7.

Moreover one transistor 22 may be switched to operate in its triode mode while the other transistor 22 is turned on, so as to enable the auxiliary circuit 18 to simultaneously provide AC and DC grading of the corresponding thyristor 16, as shown in Figure 8.

It is envisaged that, in other embodiments of the invention, the impedance device 20 may be omitted from each auxiliary circuit 18. This is because the required impedance can be provided through switching of one or more transistors 22 to operate in the triode mode. Configuration of at least one of the plurality of active auxiliary semiconductor switching elements to be switchable to operate in an impedance mode enables omission of the impedance device 20 from the auxiliary circuit 18, without adversely affecting the ability of the auxiliary circuit 18 to present an impedance to a current flowing therethrough, thus providing further reductions in the size and weight of the auxiliary circuit 18.

It is also envisaged that, in still other embodiments of the invention:
- the impedance device may be connected in series or parallel with the capacitor;
- the impedance device may be connected in parallel with the active switching bridge; and/or
- the impedance device may be connected within the active switching bridge.

It is further envisaged that, in other embodiments of the invention:
- each diode may be replaced by another type of passive current check element, i.e. any other device that permits current to flow therethrough in one direction only;
- the active switching bridge may be replaced by another type of active switching bridge, e.g. a multilevel active switching bridge;
- the capacitor may be replaced by another type of energy storage device that is capable of storing and releasing energy; and/or
- the impedance device may include an inductor and/or a resistor.

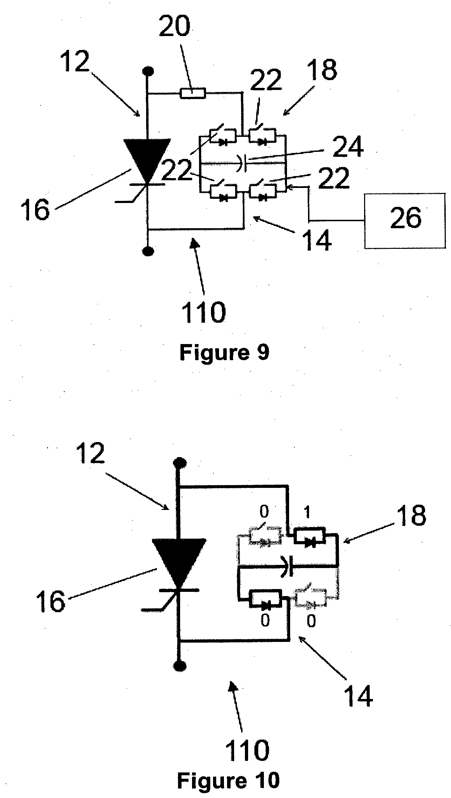

A second semiconductor switching circuit 110 according to a second embodiment of the invention is shown in Figure 9 and is designated generally by the reference numeral 110. The second semiconductor switching circuit 110 is similar in structure and operation to the first semiconductor switching circuit 10, and like features share the same reference numerals.

The second semiconductor switching circuit 110 differs from the first semiconductor switching circuit 10 in that, in the second semiconductor switching circuit 110, the plurality of transistors 22 define first and second sets of transistors 22, and the first and second sets of transistors 22 are connected in parallel with the capacitor 24 in a full-bridge arrangement between the first and second bridge terminals.

The capacitor 24 is selectively bypassed or inserted into the auxiliary circuit 18 by changing the states of the transistors 22. This selectively directs current through the capacitor 24 or causes current to bypass the capacitor 24 so that the auxiliary circuit 18 presents a zero or positive or negative voltage to a current flowing therethrough.

The capacitor 24 is bypassed when the transistors 22 are configured to directly connect the bridge terminals together. This causes current in the auxiliary circuit 18 to pass directly between the bridge terminals and bypass the capacitor 24, and so the auxiliary circuit 18 presents a zero voltage to a current flowing therethrough.

The capacitor 24 is inserted into the auxiliary circuit 18 when the transistors 22 are configured to allow the current in the auxiliary circuit 18 to flow into and out of the capacitor 24. The capacitor 24 then charges or discharges its stored energy so as to present a non-zero voltage to a current flowing therethrough.

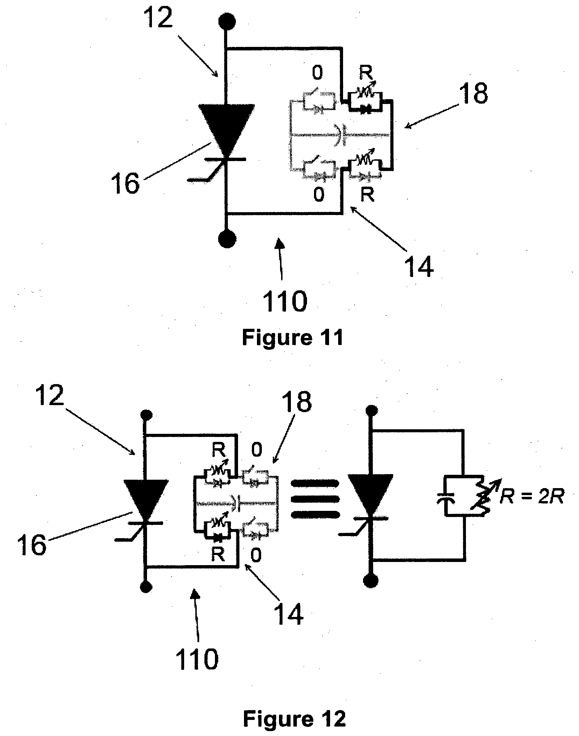

Such an arrangement permits current to flow through the active switching bridge in either direction between the first and second bridge terminals. The full-bridge arrangement of the transistors 22 and capacitor 24 advantageously permits any formed circuit to be connected in parallel or inverse-parallel with the thyristor 16 without having to alter the connection between the main and auxiliary current branches 12,14. The auxiliary circuit 18 by virtue of its full-bridge arrangement is capable of operating in four quadrants, and can be controlled to form each of the impedance-capacitance and impedance circuits, as shown in Figures 10 to 13, in order to perform the various functions described above with reference to the first semiconductor switching circuit 10.

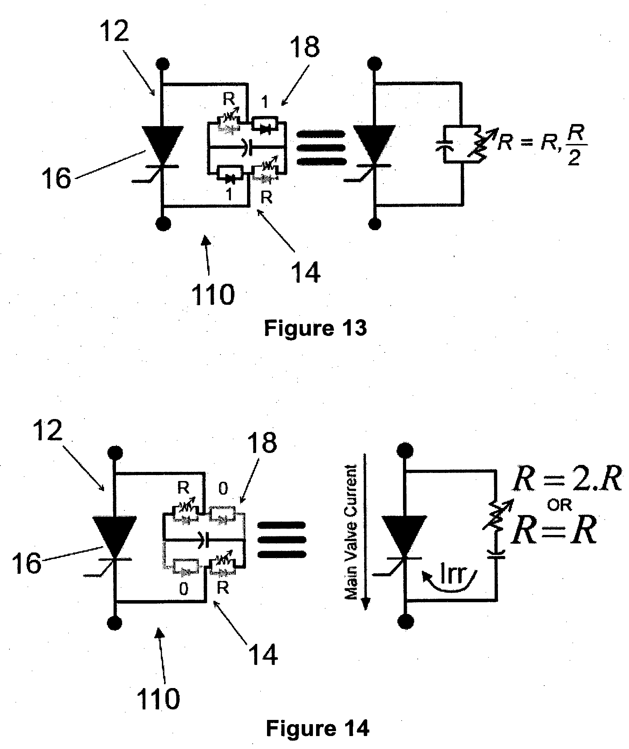

Additionally the control unit 26 may switch the transistors 22 of the auxiliary circuit 18 to arrange the alternative current path to flow through the capacitor 24 and thereby insert the capacitor 24 into the auxiliary circuit 18 such that the impedance-capacitance circuit is connected in inverse parallel with the thyristor 16, as shown in Figure 14. This permits a reverse recovery current flowing through the main current branch 12 to be diverted to flow through the alternative current path to regulate the reverse recovery current flowing through the thyristor 16.

By diverting the reverse recovery current to flow in the alternative current path, the reverse recovery current is prevented from flowing out of the second semiconductor switching circuit 110, and thereby prevents the reverse recovery current from flowing out of the corresponding valve 36,38, thus avoiding the problems caused by the reverse recovery current. This is particular beneficial for series-connected thyristors 16 with dissimilar recovery characteristics.

Optionally, in embodiments of the invention, the auxiliary current branch 14 may be configured to store energy (e.g. using the capacitor 24) when a current flowing through the main current branch 12 is diverted to flow through the alternative current path, and the control unit 26 may be configured to switch the active switching bridge to selectively release the stored energy into the corresponding AC terminal 40 and/or DC terminal 32,34.

It will be understood that, although the control unit 26 is omitted from the figures corresponding to the following embodiments for purposes of illustrative clarity, the control unit 26 is still operatively connected with the respective active switching bridge in each of the following embodiments for the purposes of the specification.

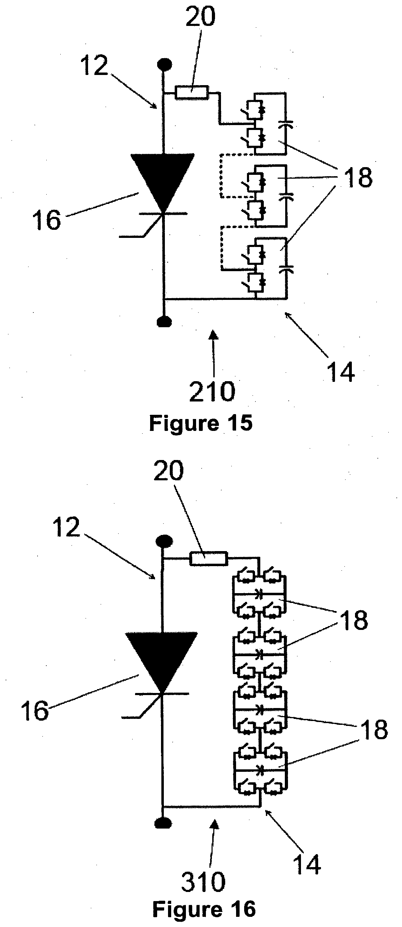

A third semiconductor switching circuit 210 according to a third embodiment of the invention is shown in Figure 15 and is designated generally by the reference numeral 210. The third semiconductor switching circuit 210 is similar in structure and operation to the first semiconductor switching circuit 10, and like features share the same reference numerals.

The third semiconductor switching circuit 210 differs from the first semiconductor switching circuit 10 in that the auxiliary current branch 14 of the third semiconductor switching circuit 210 includes a plurality of series-connected auxiliary circuits 18. Each auxiliary circuit 18 of the third semiconductor switching circuit 210 includes a pair of transistors 22 connected in parallel with an energy storage device in a half-bridge arrangement between first and second bridge terminals. The auxiliary current branch 14 further includes an impedance device 20 connected in series with the series-connected auxiliary circuits 18.

The series-connected auxiliary circuits 18 together define a chain-link converter. The structure of the chain-link converter permits build-up of a combined voltage across the chain-link converter, which is higher than the voltage available from each of its individual auxiliary circuits 18, via the insertion of the capacitors 24 of multiple auxiliary circuits 18, each providing its own voltage, into the chain-link converter. The structure of the chain-link converter also permits build-up of a combined impedance across the chain-link converter, which is higher than the impedance available from each of its auxiliary circuits 18 with one or more transistors 22 operating in the triode mode, via the insertion of multiple such transistors 22, each presenting its own impedance, into the chain-link converter.

Therefore, in addition to forming each of the impedance-capacitance and impedance circuits described above with reference to the first and second semiconductor switching circuits 10,110, the inclusion of a plurality of auxiliary circuits 18 in the auxiliary current branch 14 enables regulation of one or more of current flowing through the thyristor 16 and voltage appearing across the thyristor 16 in a stepwise manner by actively varying the number of capacitors 24, impedance devices 20 and/or transistors 22 operating in the triode mode through which the alternative current path passes.

The ratings of the capacitor 24 and/or impedance device 20 of each auxiliary circuit 18 may be reduced in inverse proportion to the number of auxiliary circuits 18.

A fourth semiconductor switching circuit 310 according to a fourth embodiment of the invention is shown in Figure 16 and is designated generally by the reference numeral 310. The fourth semiconductor switching circuit 310 is similar in structure and operation to the third semiconductor switching circuit 210, and like features share the same reference numerals.

The fourth semiconductor switching circuit 310 differs from the third semiconductor switching circuit 210 in that, in the fourth semiconductor switching circuit 310, each auxiliary circuit 18 includes a plurality of transistors 22 that define first and second sets of transistors 22. In each auxiliary circuit 18 and the first and second sets of transistors 22 are connected in parallel with the capacitor 24 in a full-bridge arrangement between the first and second bridge terminals.

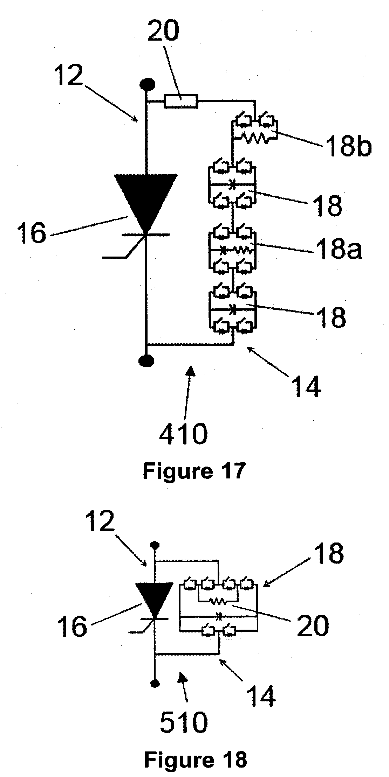

A fifth semiconductor switching circuit 410 according to a fifth embodiment of the invention is shown in Figure 17 and is designated generally by the reference numeral 410. The fifth semiconductor switching circuit 410 is similar in structure and operation to the fourth semiconductor switching circuit 310, and like features share the same reference numerals.

The fifth semiconductor switching circuit 410 differs from the fourth semiconductor switching circuit 310 in that, in the fifth semiconductor switching circuit 410, one of the auxiliary circuits 18a includes a limb in place of its capacitor 24, whereby the limb is a series-connection of a resistor and capacitor 24, and another one of the auxiliary circuits 18b is replaced by a further auxiliary circuit 18 with a pair of transistors 22 that are connected in parallel with a resistor in a half-bridge arrangement between first and second bridge terminals.

The auxiliary circuit 18 of the invention may be configured in different ways in order to define an auxiliary circuit 18 with a multilevel active switching bridge.

A sixth semiconductor switching circuit 510 according to a sixth embodiment of the invention is shown in Figure 18 and is designated generally by the reference numeral 510. The sixth semiconductor switching circuit 510 is similar in structure and operation to the second semiconductor switching circuit 110, and like features share the same reference numerals.

The sixth semiconductor switching circuit 510 differs from the second semiconductor switching circuit 110 in that, in the sixth semiconductor switching circuit 510, one of the first and second sets of transistors 22 includes first and second pairs of transistors 22 separated by the corresponding bridge terminal, the first pair of transistors 22 being separated by a first junction, the second pair of transistors 22 being separated by a second junction, and the impedance device 20 is connected across the first and second junctions.

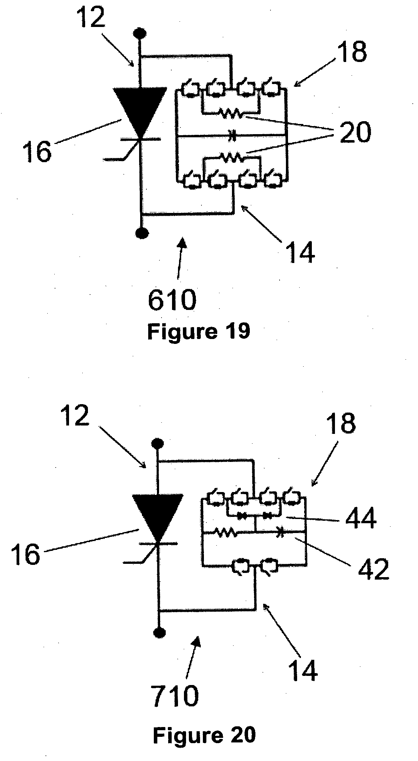

A seventh semiconductor switching circuit 610 according to a seventh embodiment of the invention is shown in Figure 19 and is designated generally by the reference numeral 610. The seventh semiconductor switching circuit 610 is similar in structure and operation to the sixth semiconductor switching circuit 510, and like features share the same reference numerals.

The seventh semiconductor switching circuit 610 differs from the sixth semiconductor switching circuit 510 in that, in the seventh semiconductor switching circuit 610, both of the first and second sets of transistors 22 includes first and second pairs of transistors 22 separated by the corresponding bridge terminal. In this embodiment, each first pair of transistors 22 is separated by a respective first junction, and each second pair of transistors 22 is separated by a respective second junction. The auxiliary current branch 14 includes two impedance devices 20, whereby each impedance device 20 is connected across a respective pair of first and second junctions.

An eighth semiconductor switching circuit 710 according to an eighth embodiment of the invention is shown in Figure 20 and is designated generally by the reference numeral 710. The eighth semiconductor switching circuit 710 is similar in structure and operation to the sixth semiconductor switching circuit 510, and like features share the same reference numerals.

The eighth semiconductor switching circuit 710 differs from the sixth semiconductor switching circuit 510 in that, in the eighth semiconductor switching circuit 710, the impedance device 20 is not connected across the first and second junction, but instead the auxiliary circuit 18 includes a limb 42 that includes a series connection of the capacitor 24 and impedance device 20. The first and second sets of transistor 22 are connected in parallel with the limb 42 to define a full-bridge arrangement between the first and second bridge terminals.

The auxiliary circuit 18 further includes a pair of diodes 44. The pair of diodes 44 are connected across the first and second junctions. A third junction between the pair of diodes 44 are connected to a fourth junction between the series-connected capacitor 24 and impedance device 20 of the limb 42.

Whilst the preferred option for connection across the first and second junctions is the pair of diodes 44 shown in Figure 20, it is envisaged that in other embodiments of the invention the pair of diodes 44 may be replaced by transistors that can be actively controlled to perform a similar functionality.

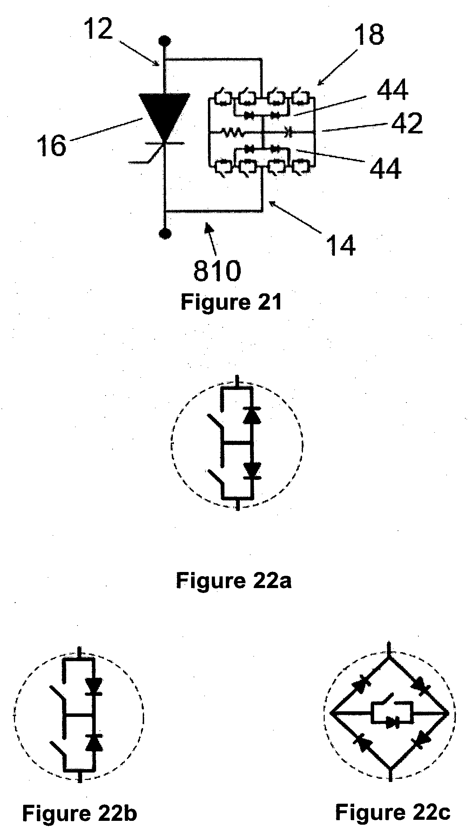

A ninth semiconductor switching circuit 810 according to a ninth embodiment of the invention is shown in Figure 21 and is designated generally by the reference numeral 810. The ninth semiconductor switching circuit 810 is similar in structure and operation to the eighth semiconductor switching circuit 710, and like features share the same reference numerals.

The ninth semiconductor switching circuit 810 differs from the eighth semiconductor switching circuit 710 in that, in the ninth semiconductor switching circuit 810, both of the first and second sets of transistors 22 includes first and second pairs of transistors 22 separated by the corresponding bridge terminal. In this embodiment, each first pair of transistors 22 is separated by a respective first junction, and each second pair of transistors 22 is separated by a respective second junction. The auxiliary current branch 14 includes two pairs of diodes 44. Each pair of diodes 44 are connected across a respective pair of first and second junctions. A respective third junction between each pair of diodes 44 are connected to the fourth junction between the series-connected capacitor 24 and impedance device 20 of the limb 42.

The inclusion of the control unit 26 configured to create an alternative current path via the auxiliary current branch 14, and thereby via the capacitor 24 and/or impedance device 20, allows each of the aforementioned semiconductor switching circuits to provide a range of functions for improving the switching performance of the corresponding thyristor 16 by selectively connecting the capacitor 24 and/or impedance device 20 of the auxiliary circuit 18 to the thyristor 16 to modify one or more of current flowing through the thyristor 16 and voltage appearing across the thyristor 16.

In addition the ability of the control unit 26 to switch the auxiliary circuit 18 out of circuit with the main current path permits removal of the alternative current path when there is no need for regulation of one or more of current flowing through the thyristor 16 and voltage appearing across the thyristor 16. This means that the auxiliary circuit 18 is only required to stay connected to the thyristor 16 when it is needed to perform its function. Otherwise, if the auxiliary circuit 18 were to remain connected to the thyristor 16 when it is not required to do so, the resulting increase in time during which the auxiliary circuit 18 is connected to the thyristor 16 would require a corresponding increase in electrical rating of each component of the auxiliary circuit 18, thus resulting in an auxiliary circuit 18 with higher losses and with increased size and weight.

Moreover the provision of an active switching bridge to connect the auxiliary circuit 18 into and out of circuit with the main current branch 12, and thereby to permit creation of the alternative current path via the auxiliary current branch 14, permits the control unit 26 to arrange the route through which the alternative current path passes through the auxiliary current branch 14 such that current can flow through various routes in the auxiliary current branch 14. This is because, as described hereinabove with reference to the various embodiments of the invention, the structure of the active switching bridge permits its configuration to provide more than one route for current flowing therethrough. This in turn permits arrangement of the auxiliary circuit components to provide a more compact and cheaper auxiliary circuit 18 whilst retaining its functionality.

The structure of each active auxiliary semiconductor switching element may vary in other embodiments.

It is envisaged that, in other embodiments of the invention, the anti-parallel connected pair of transistor and diode may be replaced by a transistor.

It is envisaged that, in still other embodiments of the invention, each transistor 22 may be replaced by another transistor that omits a triode mode.

It is envisaged that, in further other embodiments of the invention, each transistor 22 may be replaced by an active bidirectional semiconductor switching element. Such a bidirectional semiconductor switching element may include:
- a pair of inverse-series-connected active semiconductor switching elements, as shown in Figures 22a and 22b; or
- a plurality of diodes connected in parallel with an active semiconductor switching element in a full-bridge arrangement, as shown in Figure 22c.

## Claims

1. A semiconductor switching circuit (10, 110, 210, 310, 410, 510, 610, 710, 810), for use in a HVDC power converter, comprising:
a main current branch (12) including a main semiconductor switching element (16) and through which current flows when the main semiconductor switching element (16) is switched on;
an auxiliary current branch (14) connected in parallel or inverse-parallel with the main current branch (12),
the auxiliary current branch (14) including an auxiliary circuit (18, 18a, 18b), the auxiliary circuit (18, 18a, 18b) including a plurality of active auxiliary semiconductor switching elements (22) connected to form an active switching bridge, the auxiliary current branch (14) further including an energy storage device (24) and/or an impedance device (20), the active switching bridge having a control unit (26) operatively connected therewith,
**characterised by** the control unit (26) being configured to switch the active switching bridge to connect the auxiliary circuit (18, 18a, 18b) into and out of circuit with the main current branch (12) and thereby selectively create an alternative current path via the auxiliary current branch (14) whereby current flowing through the main current branch (12) is diverted to flow through the alternative current path to regulate one or more of current flowing through the main semiconductor switching element (16) and voltage appearing across the main semiconductor switching element (16), wherein the control unit (26) is configured to switch the active switching bridge to arrange the alternative current path to selectively pass through the energy storage device (24) and/or impedance device (20).

2. A semiconductor switching circuit (10, 110, 210, 310, 410, 510, 610, 710, 810) according to any preceding claim wherein the control unit (26) is configured to switch the active switching bridge to arrange the alternative current path to selectively pass through and bypass the energy storage device (24) and/or impedance device (20).

3. A semiconductor switching circuit (10, 110, 210, 310, 410, 510, 610, 710, 810)according to any preceding claim wherein the control unit (26) is configured to switch the active switching bridge to connect the auxiliary circuit (18, 18a, 18b) into and out of circuit with the main current branch (12) and thereby selectively create an alternative current path via the auxiliary current branch (14) whereby current flowing through the main current branch (12) is diverted to flow through the alternative current path to:
• regulate one or more of a rate of change of current flowing through the main semiconductor switching element (16) and a rate of change of voltage appearing across the main semiconductor switching element (16); and/or
• regulate a voltage appearing across the main semiconductor switching element (16) and thereby provide AC and/or DC voltage grading for the main semiconductor switching element (16).

4. A semiconductor switching circuit (10, 110, 210, 310, 410, 510, 610, 710, 810) according to any preceding claim wherein the control unit (26) is configured to switch the active switching bridge to connect the auxiliary circuit (18, 18a, 18b) into and out of circuit with the main current branch (12) and thereby selectively create an alternative current path via the auxiliary current branch (14) whereby a reverse recovery current flowing through the main current branch (12) is diverted to flow through the alternative current path to regulate the reverse recovery current flowing through the main semiconductor switching element (16).

5. A semiconductor switching circuit (10, 110, 210, 310, 410, 510, 610, 710, 810) according to any preceding claim including circuit terminals (32, 34, 40) connectable to an electrical network, wherein the main and auxiliary current branches (12, 14) extend between the circuit terminals (32, 34, 40), the auxiliary current branch (14) is configured to store energy when a current flowing through the main current branch (12) is diverted to flow through the alternative current path, and wherein the control unit (26) is configured to switch the active switching bridge to selectively release the stored energy into at least one of the circuit terminals (32, 34, 40).

6. A semiconductor switching circuit (10, 110, 210, 310, 410, 710, 810) according to any preceding claim wherein the impedance device (20) is connected in series or parallel with the energy storage device (24) and/or active switching bridge.

7. A semiconductor switching circuit (10, 110, 210, 310, 410, 510, 610, 710, 810) according to any preceding claim wherein the energy storage device (24) and/or impedance device (20) is connected within the active switching bridge.

8. A semiconductor switching circuit (10, 210, 410) according to any preceding claim wherein the plurality of active auxiliary semiconductor switching elements (22) are connected in parallel with the energy storage device (24) in a half-bridge arrangement between first and second bridge terminals.

9. A semiconductor switching circuit (210, 310, 410, 510, 610, 710, 810) according to any of Claims 1 to 7 wherein the plurality of active auxiliary semiconductor switching elements (22) define first and second sets of active auxiliary semiconductor switching elements (22), and the first and second sets of active auxiliary semiconductor switching elements (22) are connected in parallel with the energy storage device (24) in a full-bridge arrangement between first and second bridge terminals.

10. A semiconductor switching circuit (410, 710, 810) according to Claim 9 wherein the auxiliary circuit (18, 18a, 18b) includes a limb (42), the limb (42) including a series connection of the energy storage and impedance devices (24, 20), and the first and second sets of active auxiliary semiconductor switching elements (22) are connected in parallel with the limb (42) to define a full-bridge arrangement between the first and second bridge terminals.

11. A semiconductor switching circuit (710, 810) according to Claim 10 wherein at least one of the first and second sets of active auxiliary semiconductor switching elements (22) includes first and second pairs of active auxiliary semiconductor switching elements (22) separated by the corresponding bridge terminal, the or each first pair of active auxiliary semiconductor switching elements (22) being separated by a first junction, the or each second pair of active auxiliary semiconductor switching elements (22) being separated by a second junction, and the auxiliary circuit (18) includes at least one pair of active switching elements or passive current check elements (44), the or each pair of active switching elements or passive current check elements (44) being connected across the first and second junctions, a third junction between the or each pair of active switching elements or passive current check elements (44) being connected to a fourth junction between the series-connected energy storage and impedance devices (24, 20) of the limb (42).

12. A semiconductor switching circuit (510, 610) according to any of Claims 9 to 11 wherein one of the first and second sets of active auxiliary semiconductor switching elements (22) includes first and second pairs of active auxiliary semiconductor switching elements (22) separated by the corresponding bridge terminal, the first pair of active auxiliary semiconductor switching elements (22) being separated by a first junction, the second pair of active auxiliary semiconductor switching elements (22) being separated by a second junction, and the impedance device (20) is connected across the first and second junctions.

13. A semiconductor switching circuit (10, 110, 210, 310, 410, 510, 610, 710, 810) according to any preceding claim wherein the active switching bridge is a multilevel active switching bridge.

14. A semiconductor switching circuit (210, 310, 410) according to any preceding claim wherein the auxiliary current branch (14) includes a plurality of auxiliary circuits (18), and wherein at least two of the plurality of auxiliary circuits (18) are connected in series and/or at least two of the plurality of auxiliary circuits (18) are connected in parallel.

15. A semiconductor switching circuit (10, 110, 210, 310, 410, 510, 610, 710, 810) according to any preceding claim wherein the energy storage device (24) is or includes a capacitor, and/or wherein the impedance device (20) includes an inductor and/or a resistor.

16. A semiconductor switching circuit (10, 110, 210, 310, 410, 510, 610, 710, 810) according to any preceding claim wherein at least one of the plurality of active auxiliary semiconductor switching elements (22) is switchable to operate in an impedance mode to present an impedance to a current flowing therethrough, and wherein the alternative current path when created passes through the auxiliary semiconductor switching element (22) that is switched to operate in its impedance mode, preferably wherein the or each active auxiliary semiconductor switching element (22) switchable to operate in an impedance mode is or includes a transistor that is switchable to operate in a triode mode.

17. A semiconductor switching circuit according to any preceding claim wherein at least one of the plurality of active auxiliary semiconductor switching elements (22) is a bidirectional semiconductor switching element.

## Patentansprüche

1. Halbleiterschaltkreis (10, 110, 210, 310, 410, 510, 610, 710, 810) zum Gebrauch in einem HVDC-Leistungswandler, umfassend:
einen Hauptstromzweig (12), der ein Haupthalbleiterschaltelement (16) enthält und durch den Strom fließt, wenn das Haupthalbleiterschaltelement (16) eingeschaltet ist;
einen Hilfsstromzweig (14), der mit dem Hauptstromzweig (12) parallel oder umgekehrt parallel geschaltet ist,
wobei der Hilfsstromzweig (14) einen Hilfskreis (18, 18a, 18b) enthält, wobei der Hilfskreis (18, 18a, 18b) mehrere aktive Hilfshalbleiterschaltelemente (22) enthält, die zum Ausbilden einer aktiven Schaltbrücke verbunden sind, wobei der Hilfsstromkreis (14) ferner ein Energiespeichergerät (24) und/oder ein Impedanzgerät (20) enthält, wobei die aktive Schaltbrücke eine Speichereinheit (26) aufweist, die betriebsfähig damit verbunden ist,
**dadurch gekennzeichnet, dass** die Steuereinheit (26) zum Schalten der aktiven Schaltbrücke zum Schalten des Hilfskreises (18, 18a, 18b) in den und aus dem Kreis mit dem Hauptstromzweig (12) und dadurch selektiv einen alternativen Stromweg über den Hilfsstromzweig (14) konfiguriert ist, wodurch Strom, der durch den Hauptstromzweig (12) fließt, zum Fließen durch den alternativen Stromweg zum Regulieren von einem oder mehr von Strom, der durch das Haupthalbleiterschaltelement (16) fließt, und Spannung, die über das Haupthalbleiterschaltelement (16) hinweg auftritt, abgeleitet wird, wobei die Steuereinheit (26) zum Schalten der aktiven Schaltbrücke zum Anordnen des alternativen Stromwegs zum selektiven Durchlaufen des Energiespeichergeräts (24) und/oder des Impedanzgeräts (20) konfiguriert ist.

2. Halbleiterschaltkreis (10, 110, 210, 310, 410, 510, 610, 710, 810) nach einem der vorhergehenden Ansprüche, wobei die Steuereinheit (26) zum Schalten der aktiven Schaltbrücke zum Anordnen des alternativen Stromwegs zum selektiven Durchlaufen und Umgehen des Energiespeichergeräts (24) und/oder des Impedanzgeräts (20) konfiguriert ist.

3. Halbleiterschaltkreis (10, 110, 210, 310, 410, 510, 610, 710, 810) nach einem der vorhergehenden Ansprüche, wobei die Steuereinheit (26) zum Schalten der aktiven Schaltbrücke zum Schalten des Hilfskreises (18, 18a, 18b) in den oder aus dem Kreis mit dem Hauptstromzweig (12) und dadurch zum selektiven Erzeugen eines alternativen Stromwegs über den Hilfsstromzweig (14) konfiguriert ist, wodurch Strom, der durch den Hauptstromzweig (12) fließt, zum Fließen durch den alternativen Stromweg abgeleitet wird, um:
- eines oder mehr einer Änderungsrate von Strom, der durch das Haupthalbleiterschaltelement (16) fließt, und einer Änderungsrate von Spannung, die über das Haupthalbleiterschaltelement (16) hinweg auftritt, zu regulieren; und/oder
- eine Spannung, die über das Haupthalbleiterschaltelement (16) hinweg auftritt, zu regulieren und dadurch WS- und/oder GS-Spannungsgraduierung für das Haupthalbleiterschaltelement (16) vorzusehen.

4. Halbleiterschaltkreis (10, 110, 210, 310, 410, 510, 610, 710, 810) nach einem der vorhergehenden Ansprüche, wobei die Steuereinheit (26) zum Schalten der aktiven Schaltbrücke zum Schalten des Hilfskreises (18, 18a, 18b) in den oder aus dem Kreis mit dem Hauptstromzweig (12) und dadurch zum selektiven Erzeugen eines alternativen Stromwegs über den Hilfsstromzweig (14) konfiguriert ist, wodurch ein Umkehrverzögerungsstrom, der durch den Hauptstromzweig (12) fließt, zum Fließen durch den alternativen Stromweg zum Regulieren des Umkehrverzögerungsstroms, welcher durch das Haupthalbleiterschaltelement (16) fließt, abgeleitet wird.

5. Halbleiterschaltkreis (10, 110, 210, 310, 410, 510, 610, 710, 810) nach einem der vorhergehenden Ansprüche, enthaltend Kreisanschlüsse (32, 34, 40), die mit einem Stromnetz verbindbar sind, wobei der Haupt- und Hilfsstromkreis (12, 14) zwischen den Kreisanschlüssen (32, 34, 40) verlaufen, wobei der Hilfsstromkreis (14) zum Speichern von Energie konfiguriert ist, wenn ein Strom, der durch den Hauptstromzweig (12) fließt, zum Fließen durch den alternativen Stromweg abgeleitet wird, und wobei die Steuereinheit (26) zum Schalten des aktiven Schaltbrücke zum selektiven Freigeben der gespeicherten Energie in zumindest einen der Kreisanschlüsse (32, 34, 40) konfiguriert ist.

6. Halbleiterschaltkreis (10, 110, 210, 310, 410, 510, 610, 710, 810) nach einem der vorhergehenden Ansprüche, wobei das Impedanzgerät (20) in Reihe oder parallel mit dem Energiespeichergerät (24) und/oder der aktiven Schaltbrücke geschaltet ist.

7. Halbleiterschaltkreis (10, 110, 210, 310, 410, 510, 610, 710, 810) nach einem der vorhergehenden Ansprüche, wobei das Energiespeichergerät (24) und/oder das Impedanzgerät (20) innerhalb der aktiven Schaltbrücke verbunden ist.

8. Halbleiterschaltkreis (10, 210, 410) nach einem der vorhergehenden Ansprüche, wobei die mehreren aktiven Hilfshalbleiterschaltelemente (22) parallel mit dem Energiespeichergerät (24) in einer Halbbrückenanordnung zwischen ersten und zweiten Brückenanschlüssen geschaltet sind.

9. Halbleiterschaltkreis (210, 310, 410, 510, 610, 710, 810) nach einem der Ansprüche 1 bis 7, wobei die mehreren aktiven Hilfshalbleiterschaltelemente (22) erste und zweite Sätze von aktiven Hilfshalbleiterschaltelementen (22) definieren und die ersten und zweiten Sätze von Hilfshalbleiterschaltelementen (22) parallel mit dem Energiespeichergerät (24) in einer Vollbrückenanordnung zwischen ersten und zweiten Brückenanschlüssen geschaltet sind.

10. Halbleiterschaltkreis (410, 710, 810) nach Anspruch 9, wobei der Hilfskreis (18, 18a, 18b) ein Glied (42) enthält, wobei das Glied (42) eine Reihenschaltung des Energiespeicher- und Impedanzgeräts (24, 20) enthält, und wobei die ersten und zweiten Sätze von aktiven Hilfshalbleiterschaltelementen (22) parallel mit dem Glied (42) zum Definieren einer Vollbrückenanordnung zwischen den ersten und zweiten Brückenanschlüssen geschaltet sind.

11. Halbleiterschaltkreis (710, 810) nach Anspruch 10, wobei zumindest einer er ersten und zweite Sätze von aktiven Hilfshalbleiterschaltelementen (22) erste und zweite Paare von aktiven Hilfshalbleiterschaltelementen (22) enthält, die durch den entsprechenden Brückenanschluss getrennt sind, , wobei das oder jedes erste Paar von aktiven Hilfshalbleiterschaltelementen (22) durch eine erste Verbindungsstelle getrennt sind, wobei das oder jedes zweite Paar von aktiven Hilfshalbleiterschaltelementen (22) durch eine zweite Verbindungsstelle getrennt sind, und wobei der Hilfskreis (18) zumindest ein Paar von aktiven Schaltelementen oder passiven Stromprüfelementen (44) enthält, wobei das oder jedes Paar von aktiven Schaltelementen oder passiven Stromprüfelementen (44) über die erste und zweite Verbindungsstelle verbunden sind, wobei eine dritte Verbindungsstelle zwischen dem oder jedem Paar von aktiven Schaltelementen oder passiven Stromprüfelementen (44) mit einer vierten Verbindungsstelle zwischen dem in Reihe geschalteten Energiespeicher- und Impedanzgerät (24, 20) des Glieds (42) verbunden ist.

12. Halbleiterschaltkreis (510, 610) nach einem der Ansprüche 9 bis 11, wobei einer der ersten und zweiten Sätze von aktiven Hilfshalbleiterschaltelementen (22) erste und zweite Paare von aktiven Hilfshalbleiterschaltelementen (22) enthält, die durch den entsprechenden Brückenanschluss getrennt sind, wobei das erste Paar von aktiven Hilfshalbleiterschaltelementen (22) durch eine erste Verbindungsstelle getrennt ist, das zweite Paar von aktiven Hilfshalbleiterschaltelementen (22) durch eine zweite Verbindungsstelle getrennt ist und das Impedanzgerät (20) über die erste und zweite Verbindungsstelle verbunden ist.

13. Halbleiterschaltkreis (10, 110, 210, 310, 410, 510, 610, 710, 810) nach einem der vorhergehenden Ansprüche, wobei die aktive Schaltbrücke eine aktive Schaltbrücke mit mehreren Ebenen ist.

14. Halbleiterschaltkreis (210, 310, 410) nach einem der vorhergehenden Ansprüche, wobei der Hilfsstromzweig (14) mehrere Hilfskreise (18) enthält, und wobei zumindest zwei der mehreren Hilfskreise (18) in Reihe geschaltet sind und/oder zumindest zwei der mehreren Hilfskreise (18) parallel geschaltet sind.

15. Halbleiterschaltkreis (10, 110, 210, 310, 410, 510, 610, 710, 810) nach einem der vorhergehenden Ansprüche, wobei das Energiespeichergerät (24) ein Kondensator ist oder diesen enthält, und/oder wobei das Impedanzgerät (20) einen Induktor und/oder einen Widerstand enthält.

16. Halbleiterschaltkreis (10, 110, 210, 310, 410, 510, 610, 710, 810) nach einem der vorhergehenden Ansprüche, wobei zumindest eines der mehreren aktiven Hilfshalbleiterschaltelemente (22) zum Arbeiten in einem Impedanzmodus zum Aufweisen einer Impedanz zu einem Strom, der dort hindurchfließt, schaltbar ist, und wobei der alternative Stromweg, wenn er erzeugt ist, das Hilfshalbleiterschaltelement (22) durchläuft, das zum Arbeiten in seinem Impedanzmodus geschaltet ist, und wobei vorzugsweise das oder jedes aktive Hilfshalbleiterschaltelement (22), das zum Arbeiten in einem Impedanzmodus schaltbar ist, ein Transistor ist oder diesen enthält, welcher zum Arbeiten in einem Triodenmodus schaltbar ist.

17. Halbleiterschaltkreis nach einem der vorhergehenden Ansprüche, wobei zumindest eines der mehreren aktiven Hilfshalbleiterschaltelemente (22) ein bidirektionales Halbleiterschaltelement ist.

## Revendications

1. Circuit de commutation à semi-conducteurs (10, 110, 210, 310, 410, 510, 610, 710, 810) pour utilisation dans un convertisseur de puissance HVDC, comprenant :
une branche de courant principale (12) comprenant un élément de commutation à semi-conducteurs principal (16) et à travers laquelle du courant s'écoule lorsque l'élément de commutation à semi-conducteurs principal (16) y est commuté ;
une branche de courant auxiliaire (14) connectée en parallèle ou en antiparallèle avec la branche de courant principale (12),
la branche de courant auxiliaire (14) comprenant un circuit auxiliaire (18, 18a, 18b), le circuit auxiliaire (18, 18a, 18b) comprenant une pluralité d'éléments de commutation à semi-conducteurs auxiliaires actifs (22) connectés pour former un pont de commutation actif, la branche de courant auxiliaire (14) comprenant en outre un dispositif de stockage d'énergie (24) et/ou un dispositif d'impédance (20), le pont de commutation actif ayant une unité de commande (26) connectée en service avec celui-ci,
**caractérisé en ce que** l'unité de commande (26) est configurée pour commuter le pont de commutation actif afin de connecter le circuit auxiliaire (18, 18a, 18b) en circuit et hors circuit avec la branche de courant principale (12) et de créer ainsi sélectivement un trajet de courant alternatif via la branche de courant auxiliaire (14) de sorte que le courant s'écoulant à travers la branche de courant principale (12) soit dévié pour s'écouler à travers le trajet de courant alternatif afin de réguler un(e) ou plusieurs du courant s'écoulant à travers l'élément de commutation à semi-conducteurs principal (16) et de la tension apparaissant aux bornes de l'élément de commutation à semi-conducteurs principal (16), dans lequel l'unité de commande (26) est configurée pour commuter le pont de commutation actif pour s'arranger pour que le trajet de courant alternatif passe sélectivement à travers le dispositif de stockage d'énergie (24) et/ou le dispositif d'impédance (20).

2. Circuit de commutation à semi-conducteurs (10, 110, 210, 310, 410, 510, 610, 710, 810) selon l'une quelconque des revendications précédentes, dans lequel l'unité de commande (26) est configurée pour commuter le pont de commutation actif afin de s'arranger pour que le trajet de courant alternatif passe sélectivement à travers le dispositif de stockage d'énergie (24) et/ou le dispositif d'impédance (20) et dérive celui-ci.

3. Circuit de commutation à semi-conducteurs (10, 110, 210, 310, 410, 510, 610, 710, 810) selon l'une quelconque des revendications précédentes, dans lequel l'unité auxiliaire (26) est configurée pour commuter le pont de commutation actif afin de connecter le circuit auxiliaire (18, 18a, 18b) en circuit et hors circuit avec la branche de courant principale (12) et créer ainsi sélectivement un trajet de courant alternatif via la branche de courant auxiliaire (14) de sorte que le courant s'écoulant à travers la branche de courant principale (12) soit dévié pour s'écouler à travers le trajet de courant alternatif pour :
• réguler un ou plusieurs d'un taux de changement du courant s'écoulant à travers l'élément de commutation à semi-conducteurs principal (16) et d'un taux de changement de tension apparaissant aux bornes de l'élément de commutation à semi-conducteurs principal (16) ; et/ou
• réguler une tension apparaissant aux bornes de l'élément de commutation à semi-conducteurs principal (16) et fournir de la sorte une gradation de la tension CA et/ou de la tension CC pour l'élément de commutation à semi-conducteurs principal (16).

4. Circuit de commutation à semi-conducteurs (10, 110, 210, 310, 410, 510, 610, 710, 810) selon l'une quelconque des revendications précédentes, dans lequel l'unité de commande (26) est configurée pour commuter le pont de commutation actif afin de connecter le circuit auxiliaire (18, 18a, 18b) en circuit et hors circuit avec la branche de courant principale (12) et créer ainsi sélectivement un trajet de courant alternatif via la branche de courant auxiliaire (14) en sorte qu'un courant de récupération inverse s'écoulant à travers la branche de courant principale (12) soit dévié pour s'écouler à travers le trajet de courant alternatif afin de réguler le courant de récupération inverse s'écoulant à travers l'élément de commutation à semi-conducteurs principal (16).

5. Circuit de commutation à semi-conducteurs (10, 110, 210, 310, 410, 510, 610, 710, 810) selon l'une quelconque des revendications précédentes, comprenant des bornes de circuit (32, 34, 40) qui peuvent être connectées à un réseau électrique, dans lequel les branches de courant principale et auxiliaire (12, 14) s'étendent entre les bornes de circuit (32, 34, 40), la branche de courant auxiliaire (14) est configurée pour stocker de l'énergie lorsqu'un courant s'écoulant à travers la branche de courant principale (12) est dévié pour s'écouler à travers le trajet de courant alternatif et dans lequel l'unité de commande (26) est configurée pour commuter le pont de commutation actif afin de libérer sélectivement l'énergie stockée dans au moins l'une des bornes de circuit (32, 34, 40).

6. Circuit de commutation à semi-conducteurs (10, 110, 210, 310, 410, 710, 810) selon l'une quelconque des revendications précédentes, dans lequel le dispositif d'impédance (20) est connecté en série ou en parallèle avec le dispositif de stockage d'énergie (24) et/ou le pont de commutation actif.

7. Circuit de commutation à semi-conducteurs (10, 110, 210, 310, 410, 510, 610, 710, 810) selon l'une quelconque des revendications précédentes, dans lequel le dispositif de stockage d'énergie (24) et/ou le dispositif d'impédance (20) est ou sont connectés dans le pont de commutation actif.

8. Circuit de commutation à semi-conducteurs (10, 210, 410) selon l'une quelconque des revendications précédentes, dans lequel la pluralité d'éléments de commutation à semi-conducteurs auxiliaires actifs (22) est connectée en parallèle avec le dispositif de stockage d'énergie (24) dans un agencement à demi-pont entre la première et la seconde borne du pont.

9. Circuit de commutation à semi-conducteurs (210, 310, 410, 510, 610, 710, 810) selon l'une quelconque des revendications 1 à 7, dans lequel la pluralité d'éléments de commutation à semi-conducteurs auxiliaires actifs (22) définit un premier et un second ensemble d'éléments de commutation à semi-conducteurs auxiliaires actifs (22) et les premier et second ensembles d'éléments de commutation à semi-conducteurs auxiliaires actifs (22) sont connectés en parallèle avec le dispositif de stockage d'énergie (24) dans un agencement à pont intégral entre la première et la seconde borne du pont.

10. Circuit de commutation à semi-conducteurs (410, 710, 810) selon la revendication 9, dans lequel le circuit auxiliaire (18, 18a, 18b) comprend une branche (42), la branche (42) comprenant une connexion en série des dispositifs de stockage d'énergie et d'impédance (24, 20) et le premier et le second ensemble d'éléments de commutation à semi-conducteurs auxiliaires actifs (22) sont connectés en parallèle avec la branche (42) pour définir un agencement à pont intégral entre la première et la seconde borne du pont.

11. Circuit de commutation à semi-conducteurs (710, 810) selon la revendication 10, dans lequel au moins l'un du premier et du second ensemble d'éléments de commutation à semi-conducteurs auxiliaires actifs (22) comprend une première et une seconde paire d'éléments de commutation à semi-conducteurs auxiliaires actifs (22) séparées par la borne correspondante du pont, la ou chaque première paire d'éléments de commutation à semi-conducteurs auxiliaires actifs (22) étant séparée par une première jonction, la ou chaque seconde paire d'éléments de commutation à semi-conducteurs auxiliaires actifs (22) étant séparée par une deuxième jonction, et le circuit auxiliaire (18) comprend au moins une paire d'éléments de commutation actifs ou d'éléments de contrôle de courant passifs (44), la ou chaque paire d'éléments de commutation actifs ou d'éléments de contrôle de courant passifs (44) étant connectée aux bornes de la première et de la deuxième jonction, une troisième jonction entre la ou chaque paire d'éléments de commutation actifs ou d'éléments de contrôle de courant passifs (44) étant connectée à une quatrième jonction entre les dispositifs de stockage d'énergie et d'impédance connectés en série (24, 20) de la branche (42).

12. Circuit de commutation à semi-conducteurs (510, 610) selon l'une quelconque des revendications 9 à 11, dans lequel l'un des premier et second ensembles d'éléments de commutation à semi-conducteurs auxiliaires actifs (22) comprend une première et une seconde paire d'éléments de commutation à semi-conducteurs auxiliaires actifs (22) séparées par la borne correspondante du pont, la première paire d'éléments de commutation à semi-conducteurs auxiliaires actifs (22) étant séparée par une première jonction, la seconde paire d'éléments de commutation à semi-conducteurs auxiliaires actifs (22) étant séparée par une deuxième jonction et le dispositif d'impédance (20) est connecté aux bornes de la première et de la deuxième jonction.

13. Circuit de commutation à semi-conducteurs (10, 110, 210, 310, 410, 510, 610, 710, 810) selon l'une quelconque des revendications précédentes, dans lequel le pont de commutation actif est un pont de commutation actif à niveaux multiples.

14. Circuit de commutation à semi-conducteurs (210, 310, 410) selon l'une quelconque des revendications précédentes, dans lequel la branche de courant auxiliaire (14) comprend une pluralité de circuits auxiliaires (18) et dans lequel au moins deux de la pluralité de circuits auxiliaires (18) sont connectés en série et/ou au moins deux de la pluralité de circuits auxiliaires (18) sont connectés en parallèle.

15. Circuit de commutation à semi-conducteurs (10, 110, 210, 310, 410, 510, 610, 710, 810) selon l'une quelconque des revendications précédentes, dans lequel le dispositif de stockage d'énergie (24) est ou comprend un condensateur et/ou le dispositif d'impédance (20) comprend un inducteur et/ou une résistance.

16. Circuit de commutation à semi-conducteurs (10, 110, 210, 310, 410, 510, 610, 710, 810) selon l'une quelconque des revendications précédentes, dans lequel au moins l'un de la pluralité d'éléments de commutation à semi-conducteurs auxiliaires actifs (22) peut être commuté pour fonctionner en mode d'impédance afin de présenter une impédance à un courant qui le traverse, et dans lequel le trajet de courant alternatif, lorsqu'il est créé, passe à travers l'élément de commutation à semi-conducteurs auxiliaire (22) qui est commuté pour fonctionner dans son mode d'impédance, de préférence dans lequel le ou chaque élément de commutation à semi-conducteurs auxiliaire actif (22) qui peut être commuté pour fonctionner en mode d'impédance est ou comprend un transistor qui peut être commuté pour fonctionner en mode de triode.

17. Circuit de commutation à semi-conducteurs selon l'une quelconque des revendications précédentes, dans lequel au moins l'un de la pluralité d'éléments de commutation à semi-conducteurs auxiliaires actifs (22) est un élément de commutation à semi-conducteurs bidirectionnel.
